# EUROPEAN PATENT APPLICATION

(11) **EP 1 857 356 A1**
(43) Date of publication of application: **21.11.2007**
(21) Application number: 06010450.2
(22) Date of filing: 20.05.2006
(51) Int. Cl.: B62M 9/08

(54) **Chain wheel for bicycle**

(71) Applicant: Shu, Ming-Tsan, Nanxi Shiang, Tainan County (TW)
(72) Inventor: Shu, Ming-Tsan, Nanxi Shiang, Tainan County (TW)
(74) Representative: Reichel, Wolfgang

(57) **Abstract**

A chain wheel for a bicycle includes an oblong gear (1) having a flat shape. The oblong gear has a central point (11) and has a periphery (12) having two opposite relatively shortest points (13) and two opposite relatively longest points (14). The periphery of the oblong gear has a tooth number equal to that of a circular gear. The oblong gear is driven by two pedals (2) to drive and rotate a chain (20). Thus, the moment produced by the oblong gear has different values to compensate the different positions of the two pedals, so that the rider's legs can apply a pedaling force on the two pedals evenly and smoothly, thereby facilitating the rider pedaling the two pedals.

## Description

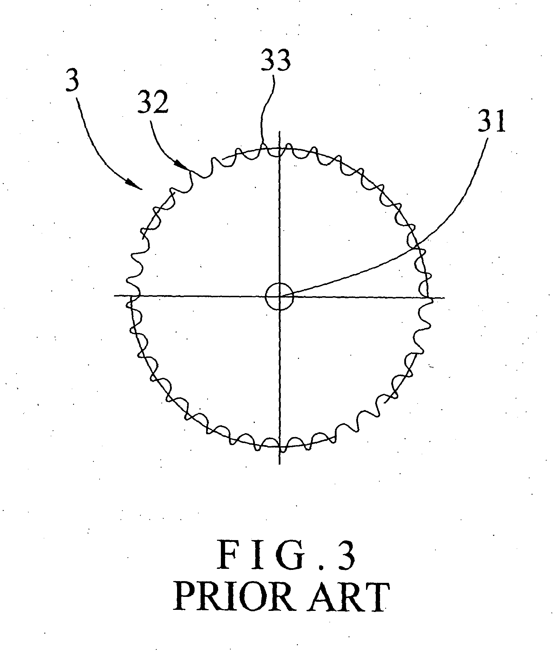

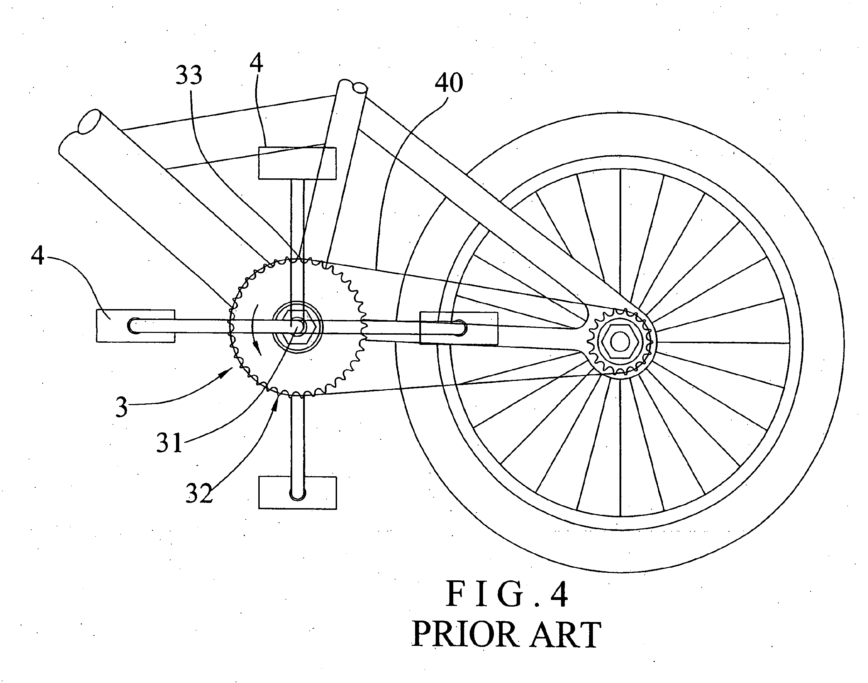

A conventional chain wheel for a bicycle in accordance with the prior art shown in Figs. 3 and 4 comprises a circular gear 3 having a central point 31 and has a serrated periphery 32 having a plurality of peripheral points 33. The circular gear 3 has a constant radius so that the distance between each of the peripheral points 33 of the periphery 32 and the central point 31 of the circular gear 3 has a constant value. When the chain wheel is mounted on a bicycle, the circular gear 3 is driven by two pedals 4 to drive and rotate a chain 40.

In practice, the two pedals 4 apply a drive force on the circular gear 3, and the circular gear 3 applies a drive force on the chain 40 so that the two pedals 4 drive the circular gear 3 to drive the chain 40 by a linkage action. Thus, a drive force arm of the two pedals 4 is defined between each of the two pedals 4 and the central point 31 of the circular gear 3, and a driven force arm of the circular gear 3 is defined between one of the peripheral points 33 of the circular gear 3 with the chain 40 and the central point 31 of the circular gear 3. At this time, the distance between each of the two pedals 4 and the central point 31 of the circular gear 3 has a constant value, so that the drive force arm of the two pedals 4 has a constant value.
In addition, the distance between each of the peripheral points 33 of the circular gear 3 and the central point 31 of the circular gear 3 has a constant value, so that the driven force arm of the circular gear 3 has a constant value. Thus, the drive force arm of the two pedals 4 and the driven force arm of the circular gear 3 produce a constant moment to drive and rotate a chain 40.

Thus, when the two pedals 4 are located at an upright state, the rider's legs are bent and cannot step the two pedals 4 easily, so that the rider's legs have to exert a larger force to drive the two pedals 4, and when the two pedals 4 are located at a horizontal state, the rider's legs are expanded fully and can step the two pedals 4 easily, so that the rider's legs only need to exert a smaller force to drive the two pedals 4.

However, the rider's legs have to exert a larger force to drive the two pedals 4 when the two pedals 4 are located at an upright state, they only need to exert a smaller force to drive the two pedals 4 when the two pedals 4 are located at a horizontal state, so that the force applied by the rider's legs on the two pedals 4 is not evenly distributed, thereby causing inconvenience to the rider and wasting the manual work.

The primary objective of the present invention is to provide a chain wheel that applies an evenly distributed force to drive a bicycle smoothly.
Another objective of the present invention is to provide a chain wheel, wherein when the two pedals are located at an upright state, the rider's legs are bent and cannot step the two pedals easily, while the oblong gear produces the largest moment to save the manual work, so that the rider's legs can pedal the two pedals in an easier way when the two pedals are located at an upright state.

A further objective of the present invention is to provide a chain wheel, wherein the moment produced by the oblong gear has different values to compensate the different positions of the two pedals, so that the rider's legs can apply a pedaling force on the two pedals evenly and smoothly, thereby facilitating the rider pedaling the two pedals.

A further objective of the present invention is to provide a chain wheel, wherein the rider applies a pedaling force on the two pedals 2 evenly and smoothly, so that the rider can pedal the two pedals in a more comfortable manner.

The above mentioned objectives are solved with a chain wheel with the features according to the present claim 1. Preferred embodiments of the invention are presented in the subclaims.

Further benefits and advantages of the present invention will become apparent after a careful reading of the detailed description with appropriate reference to the accompanying drawings.

### In the drawings:

Fig. 1 is a plan view of a chain wheel in accordance with a preferred embodiment of the present invention.
Fig. 2 is a schematic plan operational view of the chain wheel for a bicycle as shown in Fig. 1.
Fig. 3 is a plan view of a conventional chain wheel in accordance with the prior art.
Fig. 4 is a schematic plan operational view of the conventional chain wheel for a bicycle as shown in Fig. 3.

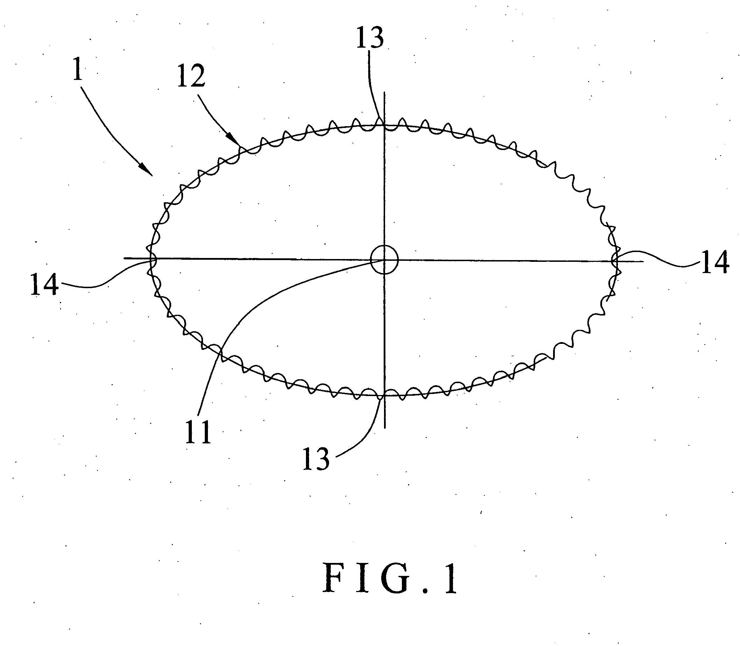

Referring to the drawings and initially to Fig. 1, a chain wheel for a bicycle in accordance with the preferred embodiment of the present invention comprises an oblong gear 1 having a flat shape.

The oblong gear 1 has a central point 11 and has a serrated periphery 12 having two opposite relatively shortest points 13 and two opposite relatively longest points 14. The periphery 12 of the oblong gear 1 has a tooth number equal to that of a circular gear 3 as shown in Fig. 3.

It is appreciated that, the periphery 12 and the central point 11 of the oblong gear 1 define a relatively shortest distance from each of the relatively shortest points 13 to the central point 11 of the oblong gear 1 and a relatively longest distance from each of the relatively longest points 14 to the central point 11 of the oblong gear 1.

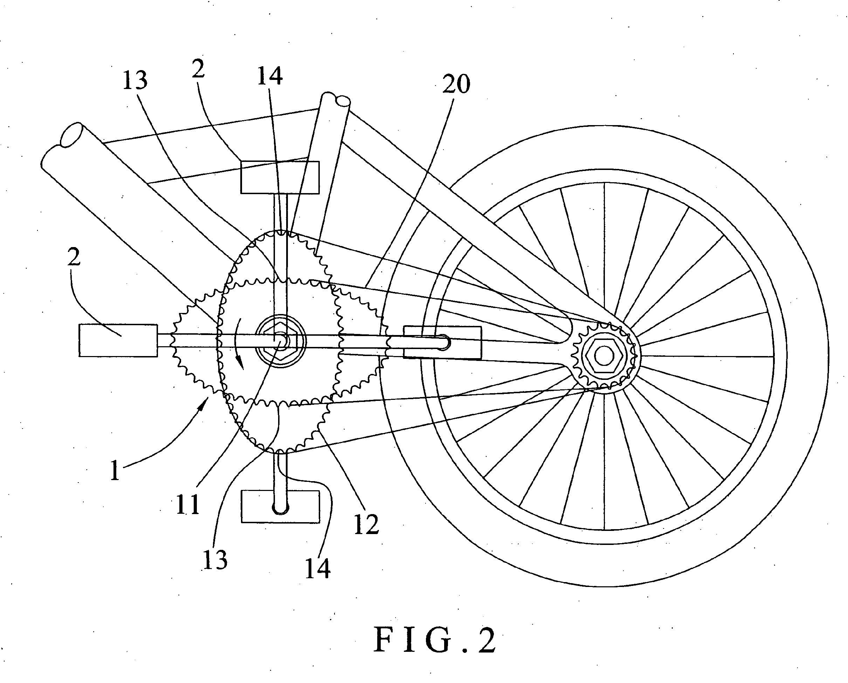

Referring to Fig. 2 with reference to Fig. 1, when the chain wheel is mounted on a bicycle, the oblong gear 1 is driven by two pedals 2 to drive and rotate a chain 20. In assembly, the two pedals 2 are in line with a shorter axis of the oblong gear 1 so that when the two pedals 2 are located at an upright state, the oblong gear 1 is located at a horizontal state, and when the two pedals 2 are located at a horizontal state, the oblong gear 1 is located at an upright state.

In practice, the two pedals 2 apply a drive force on the oblong gear 1 and the oblong gear 1 applies a driven force on the chain 20 so that the two pedals 2 drive the oblong gear 1 to drive the chain 20 by a linkage action. Thus, a drive force arm of the two pedals 2 is defined between each of the two pedals 2 and the central point 11 of the oblong gear 1 and a driven force arm of the oblong gear 1 is defined between a contact point of the periphery 12 of the oblong gear 1 with the chain 20 and the central point 11 of the oblong gear 1.

At this time, the distance between each of the two pedals 2 and the central point 11 of the oblong gear 1 has a constant value, so that the drive force arm of the two pedals 2 has a constant value. In addition, the periphery 12 of the oblong gear 1 has different contact points with the chain 20 and the distance between each of the contact points of the periphery 12 of the oblong gear 1 with the chain 20 and the central point 11 of the oblong gear 1 is different, so that the driven force arm of the oblong gear 1 has a variable value.

In conclusion, the drive force arm of the two pedals 2 has a constant value, and the driven force arm of the oblong gear 1 has a variable value, so that when the driven force arm of the oblong gear 1 has a smaller value (that is, when the distance between the contact point of the periphery 12 of the oblong gear 1 with the chain 20 and the central point 11 of the oblong gear 1 is shorter), the driven force arm of the oblong gear 1 produces a larger moment to save the manual work, and when the driven force arm of the oblong gear 1 has a greater value (that is, when the distance between the contact point of the periphery 12 of the oblong gear 1 with the chain 20 and the central point 11 of the oblong gear 1 is longer), the driven force arm of the oblong gear 1 produces a smaller moment to waste the manual work.

In such a manner, when the two pedals 2 are located at an upright state and the oblong gear 1 is located at a horizontal state, each of the relatively shortest points 13 of the oblong gear 1 is in contact with the chain 20 as shown in Fig. 2, so that the driven force arm (the distance between each of the relatively shortest points 13 and the central point 11 of the oblong gear 1) of the oblong gear 1 has the minimum value and produces the largest moment to save the manual work. At this time, when the two pedals 2 are located at an upright state, the rider's legs are bent and cannot step the two pedals 2 easily, while the oblong gear 1 produces the largest moment to save the manual work, so that the rider's legs can step the two pedals 2 is a easier way.

Alternatively, when the two pedals 2 are located at a horizontal state and the oblong gear 1 is located at an upright state, each of the relatively longest points 14 of the oblong gear 1 is in contact with the chain 20 as shown in Fig. 2, so that the driven force arm (the distance between each of the relatively longest points 14 and the central point 11 of the oblong gear 1) of the oblong gear 1 has the maximum value and produces the smallest moment to waste the manual work. At this time, when the two pedals 2 are located at a horizontal state, the oblong gear 1 produces the smallest moment to waste the manual work, while the rider's legs are expanded fully and can step the two pedals 2 easily to compensate the smallest moment produced by the oblong gear 1, so that the rider's legs can step the two pedals 2 is a easier way.

Accordingly, when the two pedals 2 are located at an upright state, the rider's legs are bent and cannot step the two pedals 2 easily, while the oblong gear 1 produces the largest moment to save the manual work, so that the rider's legs can pedal the two pedals 2 is a easier way when the two pedals 2 are located at an upright state. In addition, the moment produced by the oblong gear 1 has different values to compensate the different positions of the two pedals 2, so that the rider's legs can apply a pedaling force on the two pedals 2 evenly and smoothly, thereby facilitating the rider pedaling the two pedals 2. Further, the rider applies a pedaling force on the two pedals 2 evenly and smoothly, so that the rider can pedal the two pedals in a more comfortable manner.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A chain wheel, comprising:
an oblong gear (1) having a flat shape.

2. The chain wheel in accordance with claim 1, wherein the oblong gear (1) has a central point (11) and has a periphery (12) having two opposite relatively shortest points (13) and two opposite relatively longest points (14).

3. The chain wheel in accordance with claim 1, wherein the periphery (12) of the oblong gear (1) has a tooth number equal to that of a circular gear (3).

4. The chain wheel in accordance with claim 2, wherein the periphery (12) and the central point (11) of the oblong gear (1) define a relatively shortest distance from each of the relatively shortest points (13) to the central point (11) of the oblong gear (1) and a relatively longest distance from each of the relatively longest points (14) to the central point (11) of the oblong gear (1).

5. The chain wheel in accordance with claim 2, wherein the oblong gear (1) is driven by two pedals (2) to drive and rotate a chain (20).

6. The chain wheel in accordance with claim 5, wherein the two pedals (2) are in line with a shorter axis of the oblong gear (1) so that when the two pedals (2) are located at an upright state, the oblong gear (1) is located at a horizontal state, and when the two pedals (1) are located at a horizontal state, the oblong gear (1) is located at an upright state.

7. The chain wheel in accordance with claim 5, wherein the two pedals (2) apply a drive force on the oblong gear (1), and the oblong gear (1) applies a drive force on the chain (20) so that the two pedals (2) drive the oblong gear (1) to drive the chain (20) by a linkage action.

8. The chain wheel in accordance with claim 7, wherein a drive force arm of the two pedals (2) is defined between each of the two pedals (2) and the central point (11) of the oblong gear (1), and a driven force arm of the oblong gear (1) is defined between one of a plurality of contact point of the periphery (12) of the oblong gear (1) with the chain (20) and the central point (11) of the oblong gear (1).

9. The chain wheel in accordance with claim 8, wherein the periphery of the oblong gear (1) has different contact points with the chain (20), and the distance between each of the contact points of the periphery (12) of the oblong gear (1) with the chain (20) and the central point (11) of the oblong gear (1) is different, so that the driven force arm of the oblong gear (1) has a variable value.

10. The chain wheel in accordance with claim 8, wherein when the driven force arm of the oblong gear (1) has a smaller value, the driven force arm of the oblong gear (1) produces a larger moment, and when the driven force arm of the oblong gear (1) has a greater value, the driven force arm of the oblong gear (1) produces a smaller moment.
